# FASCICULE DE BREVET EUROPEEN

(11) **EP 2 437 876 B1**
(45) Date de publication et mention de la délivrance du brevet: **17.01.2018**
(21) Numéro de dépôt: 10727705.5
(22) Date de dépôt: 02.06.2010
(51) Int. Cl.: C03B 1/02

(54) **PROCÉDÉ DE FABRICATION DE GRANULES AU DÉPART DE MATIÈRES PULVÉRULENTES**
VERFAHREN ZUR HERSTELLUNG VON GRANULAT AUS PULVERMATERIALEN
METHOD FOR MANUFACTURING GRANULES FROM POWDER MATERIALS

(30) Priorité: 03.06.2009 EP 09161823
(43) Date de publication de la demande: 11.04.2012
(73) Titulaire: AGC Glass Europe, 1348 Louvain-la-Neuve (BE); ARC International, 62510 Arques (FR)
(72) Inventeur: CHERDON, Benoït, B-6040 Jumet (BE); DELAVAL, Rodolphe, F-62510 Arques (FR)
(74) Mandataire: Bayot, Daisy
(86) Numéro de dépôt international: PCT/EP2010/057733
(87) Numéro de publication internationale: WO 2010/139739

(56) Documents cités:
- US-A- 4 081 259
- US-A- 4 235 618
- US-A1- 2008 087 044

## Description

### 1. Domaine de l'invention

La présente invention concerne un procédé de fabrication de granules au départ de matières pulvérulentes, en particulier de matières premières pour la fabrication du verre (ou matières vitrifiables). Plus précisément, l'invention concerne un procédé amélioré de granulation par voie humide de matières pulvérulentes pour la fabrication du verre, les granules obtenues étant destinés à être introduits ultérieurement dans un four de fusion.

### 2. Solutions de l'art antérieur

Dans la fabrication du verre, le coût de l'énergie représente une part très importante du coût total de production. Pour réduire la consommation d'énergie dans la production du verre via notamment l'amélioration des cinétiques de fusion des matières premières dans le four (vitesse de fusion, homogénéité), il a été proposé jusqu'ici divers types de procédés parmi lesquels le préchauffage des matières premières avec la chaleur résiduelle des gaz sortant du four et/ou la granulation desdites matières premières sont les plus connus. En particulier, la granulation est un procédé avantageux dans la mesure où il permet de réduire la difficulté de chauffer d'une façon satisfaisante les matières premières pulvérulentes à l'intérieur du four, difficulté provenant de la mauvaise transmission de la chaleur par conduction et aussi du fait de la fusion prématurée des constituants les plus fusibles de la charge. La fusion et/ou l'affinage de matières premières vitrifiables sous forme de granules est plus rapide tout en conférant au verre fondu une meilleure homogénéité. De plus, il est évident que la manutention de granules est de loin plus aisée que la manutention de charges pulvérulentes.

La solution de la granulation est par ailleurs d'autant plus avantageuse qu'elle permet d'éviter :
- le risque de ségrégation des différents constituants soit au cours du stockage en silo ou dans les trémies sous l'action de la gravité, soit sur les tapis transporteurs par suite des vibrations; et
- l'envol des particules dites « fines » de la matière première vitrifiable (poussières) avec toutes les conséquences sur le rendement du four de fusion mais également sur la longévité des voûtes du four. De plus, cet inconvénient peut avoir un impact sur l'environnement, car les poussières qui s'envolent peuvent poser des problèmes de pollution de l'air.

De manière connue, une granulation classique de matières pulvérulentes est effectuée dans un granulateur en ajoutant aux matières premières du verre sous forme de poudres un liquide liant qui est classiquement de l'eau à laquelle est souvent ajouté un additif tel que de la soude caustique. Ce liquide liant est impératif pour permettre la formation du granule, il agit comme lubrifiant et facilite l'agglomération du mélange. On parle alors de « granulation par voie humide ».

La teneur en eau qui est usuellement mise en oeuvre pour une granulation efficace de matières pulvérulentes est de 7 à 14% en poids par rapport à la charge à granuler et idéalement au-delà de 10 % en poids. Plusieurs alternatives ont été étudiées quant à la nature, la quantité de l'additif du liant, quant à la manière d'ajouter le liquide liant à la matière pulvérulente, etc. (voir notamment les brevets FR1556285, US 3969100, US 4031175 et US 4235618). Néanmoins, dans une granulation par voie humide, les granules une fois formés doivent ensuite être séchés afin de garantir leur stabilité pour leur manutention ultérieure mais également afin d'éviter leur éclatement lors de leur introduction dans le four de fusion du fait de l'évaporation brutale de l'eau qu'ils contiennent. La teneur en eau des matières premières utilisées pour la fabrication du verre et destinées à être introduites dans le four de fusion sous forme de granules est classiquement de l'ordre de 2 à 6 % en poids.

L'étape de séchage des granules « humides » se produit dans un séchoir du type, par exemple, à tambour rotatif ou à lit fluidisé, et permet d'obtenir des granules « secs » présentant une teneur en eau idéale.

La production conventionnelle de granules secs, via une granulation par voie humide, nécessite ainsi deux étapes bien distinctes (granulation et séchage) et requiert dès lors un granulateur indépendant d'un séchoir ainsi que les étapes de manutention supplémentaire (transfert) qui en découlent. Ce procédé présente ainsi certains inconvénients, principalement d'un point de vue de la manutention. En effet, les étapes de manutention supplémentaire due au transfert du granulateur au séchoir sont délicates :
- les matières pulvérulentes auxquelles on a ajouté le liant liquide « collent » fortement et les granules humides, produits intermédiaires dans ce procédé, sont difficiles à manipuler et à sortir du granulateur ;
- les granules humides sont de faible résistance de sorte qu'elles se brisent souvent lors de leur transport au séchoir mais également pendant leur séchage.

En outre, un inconvénient majeur de ce procédé est l'énergie nécessaire afin de sécher les granules humides, ce qui vient diminuer le gain énergétique obtenu grâce à la granulation dans le cas particulier des matières premières du verre.

Il existe également un appareillage unique permettant la granulation et le séchage mais ces deux étapes ne peuvent néanmoins être réalisées en même temps et doivent être consécutives. Même s'il permet, du moins partiellement, de s'affranchir des inconvénients liés à la manutention et au transfert, ce type d'appareillage ne permet en aucun cas d'éviter le principal inconvénient énergétique du au séchage lui-même.

### 3. Objectifs de l'invention

L'invention a notamment pour objectif de pallier aux inconvénients de l'état de la technique en résolvant le(s) problème(s) technique(s), à savoir la consommation énergétique et la manutention additionnelle requise par l'étape de séchage.

Plus précisément, un objectif de l'invention, dans au moins un de ses modes de réalisation, est de fournir un procédé efficace de granulation par voie humide qui permet de s'affranchir de l'étape de séchage accompagnée de ses inconvénients précités.

Un autre objectif de l'invention, dans au moins un de ses modes de réalisation, est de fournir un procédé de granulation par voie humide qui permet d'obtenir des granules avec un taux d'humidité garantissant leur stabilité et leur facilité de manutention ainsi qu'un taux résiduel de particules fines non granulées relativement bas.

Finalement, un objectif de l'invention est également de fournir une solution aux désavantages de l'art antérieur qui soit simplifiée et économique.

### 4. Exposé de l'invention

Conformément à un mode de réalisation particulier, l'invention concerne un procédé de fabrication de granules au départ de matières pulvérulentes.

Selon l'invention, le procédé de fabrication de granules au départ de matières pulvérulentes comprend les étapes successives suivantes :
- les matières pulvérulentes à granuler sont divisées en au moins deux portions, une première portion et une deuxième portion ;
- un liquide liant est ajouté à ladite première portion de matières pulvérulentes ;
- le premier mélange ainsi obtenu est aggloméré dans un granulateur de sorte à obtenir des granules (a);
- la deuxième portion de matières pulvérulentes est ajoutée dans ledit granulateur ;
- le nouveau mélange obtenu est aggloméré dans le granulateur de sorte à obtenir des granules (b);
   et en ce que ladite première portion de matières pulvérulentes représente au plus 75 % en poids des matières pulvérulentes à granuler. Ainsi, le procédé de l'invention permet de solutionner les inconvénients des procédés de granulation par voie humide de l'art antérieur et de résoudre le(s) problème(s) technique(s) posé(s). Les inventeurs ont en effet mis en évidence qu'il était possible de s'affranchir de l'étape de séchage conventionnellement utilisée dans l'état de la technique, en séquençant de façon particulière l'étape de granulation proprement dite.

L'invention repose dès lors sur une approche tout à fait nouvelle et inventive car elle permet d'obtenir dans un granulateur, à la fin du procédé de l'invention, des granules présentant un teneur en eau adéquate sans recourir à une étape supplémentaire de séchage accompagnée des inconvénients qui en découlent.

Selon le procédé de l'invention, les matières pulvérulentes à granuler sont divisées en au moins deux portions : une première portion et une deuxième portion.

Dans un des modes de réalisation particuliers de l'invention, la première portion de matières pulvérulentes a une composition identique à celle de la deuxième portion de matières pulvérulentes. Le procédé de fabrication de granules selon l'invention est dans ce cas dit « granulation homogène ».

Dans un autre mode de réalisation particulier de l'invention, la première portion de matières pulvérulentes a une composition différente de celle de la deuxième portion de matières pulvérulentes. Le procédé de fabrication de granules selon l'invention est dans ce cas dit « granulation hétérogène». Dans ce type de granulation, il est alors possible de combiner sélectivement au sein d'un même granule des composants particuliers d'un batch de matières pulvérulentes. Dans le cas particulier où les matières pulvérulentes sont constituées de matières vitrifiables, ce type de granulation hétérogène permet d'encore améliorer certains paramètres de fusion tels qu'une augmentation supplémentaire du rendement de fusion ou une diminution plus importante du phénomène de ségrégation. Le batching sélectif de matières premières vitrifiables permet en effet, comme expliqué dans la demande de brevet US2005/0022557 A1, de contrôler les chemins de réactions existant dans le système ternaire CaO-Na2O-SiO2. Dans cette demande, certaines matières premières sont combinées dans un premier batch de granules et d'autres matières premières sont combinées dans un second batch de granules. Les deux batches de granules sont ensuite simplement rassemblés avant d'être enfournés. Ce procédé de batching sélectif nécessite donc deux granulations distinctes et multiplie ainsi les étapes à effectuer et la manutention. Avantageusement, le procédé de fabrication de granules selon l'invention permet de réaliser une granulation hétérogène de matières premières pulvérulentes en une seule granulation, en formant des granules présentant chacun en leur sein au moins deux compositions différentes et localisées de matières premières.

D'autres caractéristiques et avantages de l'invention apparaîtront plus clairement à la lecture de la description suivante de modes de réalisation préférentiels, donnés à titre de simples exemples illustratifs et non limitatifs.

### 5. Description d'un mode de réalisation de l'invention

Le procédé de l'invention est un procédé de fabrication de granules au départ de matières pulvérulentes. Par matière pulvérulente, on entend, un composé qui est sous forme de poudre et qui comprend une proportion significative de particules dites « fines ». Le diamètre moyen de ces particules fines est typiquement inférieur à environ 100 microns.

Selon l'invention, les matières pulvérulentes à granuler ont une teneur en eau comprise entre environ 0 et environ 4 % en poids. De préférence, les matières pulvérulentes à granuler ont une teneur en eau entre 0 et environ 1 % en poids.

Selon un mode de réalisation particulier, les matières pulvérulentes sont constituées de matières premières destinées à la fabrication de verre dans un four de fusion ou matières vitrifiables. Typiquement, ces matières vitrifiables comprennent, entre autres, du sable de silice, du calcaire, de la dolomie, de l'alumine, du feldspath, du carbonate de sodium. D'autres ingrédients sont également souvent présents dans ces matières vitrifiables tels que des colorants (oxydes de fer, de cobalt, de chrome,...) et des éléments dits formateurs (PbO, MgO, ZnO, BaO,...). Dans le cas de ce mode de réalisation, les granules obtenus par le procédé de l'invention sont destinés à être introduits ultérieurement dans un four de fusion, soit immédiatement après leur fabrication soit après une période stockage.

Selon l'invention, les matières pulvérulentes à granuler sont divisées en au moins deux portions : une première portion et une deuxième portion. De manière préférée, la première portion de matières pulvérulentes représente au moins 25 % en poids des matières pulvérulentes à granuler. Selon l'invention, elle représente au plus 75 % en poids des matières pulvérulentes à granuler.

La granulation selon l'invention peut être pratiquée dans tout type de granulateur connu tel que, par exemple, un granulateur à tambour, une assiette granulatrice ou un mélangeur-granulateur de type à palettes, à turbine, à double cône, à rubans, etc.

Le liquide liant utilisé dans la présente invention comprend de préférence de l'eau. Préférentiellement, elle comprend également un ou plusieurs additifs. Comme exemple de liquides liants appropriés, on citera une solution aqueuse de soude caustique, de silicate de sodium ou d'un autre sel de sodium. On préfère particulièrement une solution aqueuse de silicate de sodium.

Le liquide liant peut être préalablement ajouté à la première portion de matières pulvérulentes dans un mélangeur. Le mélange humide ainsi obtenu est ensuite envoyé dans le granulateur. Préférentiellement, selon l'invention, le liquide liant est directement ajouté dans le granulateur à la première portion de matières pulvérulentes. Le liquide liant selon l'invention peut être ajouté à la première portion de matières pulvérulentes classiquement par pulvérisation voire par aspersion dans le granulateur.

La quantité de liquide liant ajoutée à la première portion de matières pulvérulentes est comprise entre 8 et 20 % en poids dudit premier mélange. De préférence, la quantité de liquide liant ajoutée à la première portion de matières pulvérulentes est comprise entre 8 et 16 % en poids dudit premier mélange.

Le liquide liant et la première portion de matières pulvérulentes forment au sein du granulateur ledit premier mélange.

Selon l'invention, le premier mélange obtenu au départ du liquide liant et de la première portion de matières pulvérulentes est compacté dans un granulateur. Lors de cette étape, le mélange est vigoureusement brassé, les matières pulvérulentes sont agglomérées et il en résulte des granules (a) qui sont dits « humides » (par comparaison avec les granules (b) obtenus à la dernière étape du procédé). Préalablement à la compaction, le mélange peut être chauffé (classiquement, par exemple, entre 70 et 85°C).

Lorsque les granules (a) humides sont formés, la deuxième portion de matières pulvérulentes est ajoutée dans le granulateur auxdites granules (a). Les granules (a) et la deuxième portion de matières pulvérulentes forment au sein du granulateur ledit nouveau mélange.

Selon l'invention, le nouveau mélange obtenu au départ des granules (b) et de la deuxième portion de matières pulvérulentes est agglomérée dans le granulateur. Il résulte de cette étape des granules (b) dits «secs» (par comparaison avec les granules (a)). Préalablement à la compaction, le nouveau mélange peut également être chauffé (classiquement, par exemple, entre 70 et 85°C).

Les granules (b) selon l'invention possèdent une teneur moyenne en eau idéale pour leur manutention et leur stabilité mécanique, comprise entre 2 et 6 % en poids. Préférentiellement, les granules (b) possèdent une teneur en eau comprise entre 3 et 5 % en poids.

Les granules (b) selon l'invention possèdent une taille qui varie entre 0,1 et 8 mm. Par taille, on entend désigner la plus grande dimension d'un granule.

Dans un mode de réalisation de l'invention, la première portion de matières pulvérulentes a une composition différente de celle de la deuxième portion de matières pulvérulentes, une granulation hétérogène est alors mise en oeuvre. Dans ce mode réalisation, des granules (a) homogènes en composition A sont d'abord formés au départ de la première portion de matières pulvérulentes de composition A. La deuxième portion de matières pulvérulentes de composition B est alors ajoutée dans le granulateur et des granules (b) hétérogènes sont alors obtenus. Ils sont constitués d'un « coeur » de composition A enrobé par une gangue de composition B. Selon ce mode de réalisation de l'invention, le batch de matières pulvérulentes à granuler peut être divisé en plus de deux portions de sorte à obtenir des granules hétérogènes comportant un coeur enrobés de plusieurs gangues différentes.

D'autres détails et caractéristiques avantageuses ressortiront ci-après de la description des exemples non limitatifs de réalisation d'un procédé selon l'invention.

### Exemples (conformes à l'invention)

### Exemple 1 (granulation homogène) -

Des granules ont été fabriqués selon le procédé de l'invention au départ du batch de matières pulvérulentes suivant :

| **Matières premières** | **% en poids** |
|---|---|
| Sable de silice | 69 |
| Carbonate de soude | 30 |
| Sulfate de sodium | 0,4 |
| Alumine | 0,6 |

La teneur en eau initiale du batch de départ est inférieure à 1% en poids.

Le batch a été séparé en deux portions de même composition : une première portion correspondant à 45 % en poids du batch de départ et une deuxième portion correspondant à 55 % en poids du batch de départ.

La première portion a été introduite dans un granulateur de type tambour rotatif. Une solution aqueuse de silicate de sodium, Na2O.xSiO2.H20 avec x = 3,4, à 2,5 % en poids a ensuite été ajoutée dans le granulateur par pulvérisation alors que le granulateur était en mode rotation. La quantité de solution de silicate de sodium ajoutée était de 10 % en poids par rapport au mélange solution/première portion de matières premières et la durée de rotation du granulateur était d'environ 10 minutes. Des granules « humides » ont ainsi été obtenus.

La deuxième portion a ensuite été introduite dans le granulateur aux premières granules formées alors que le granulateur était en mode rotation. La durée de rotation du granulateur était cette fois d'environ 2 minutes.

Des granules présentant une teneur moyenne en eau de 4,5 % en poids ont ainsi été récoltés. Ils présentent une taille variant d'approximativement 0,1 mm à approximativement 5 mm. Ils présentent une bonne stabilité et une résistance suffisante lors de leur manutention et, dans le temps, lors de leur stockage. De plus, la quantité de particules « fines » présente dans le granulateur en fin du procédé de granulation est très faible.

### Exemple 2 (granulation hétérogène) -

Des granules ont été fabriqués suivant le même procédé que celui utilisé pour l'exemple 1 mais au départ du batch de matières pulvérulentes suivant :

| **Matières premières** | **% en poids** |
|---|---|
| Sable de silice | 61,3 |
| Calcaire | 18,0 |
| Carbonate de soude | 19,0 |
| Sulfate de sodium | 0,4 |
| Alumine | 1,3 |

La teneur en eau initiale du batch de départ est inférieure à 1% en poids.

La première portion de matières premières correspondant à 34 % en poids du batch de départ est de composition suivante:

| **Matières premières** | **% en poids** |
|---|---|
| Sable de silice | 15,9 |
| Calcaire | 18,0 |
| Carbonate | 0 |
| Sulfate de sodium | 0 |
| Alumine | 0 |

La quantité de solution aqueuse de silicate de sodium à 2.5 % en poids ajoutée était de 12 % en poids par rapport au mélange solution/première portion de matières premières.

La deuxième portion restante correspondant à 66 % poids du batch de départ et de composition différente de la première portion :

| **Matières premières** | **% en poids** |
|---|---|
| Sable de silice | 45,4 |
| Calcaire | 0 |
| Carbonate de soude | 19,0 |
| Sulfate de sodium | 0,4 |
| Alumine | 1,3 |

Des granules hétérogènes présentant une teneur moyenne en eau d'environ 4 % en poids et présentant une taille variant d'approximativement 0,1 mm à approximativement 4 mm ont ainsi été récoltés. Ces granules sont constitués d'un coeur composé de sable et de calcaire entouré d'une gangue composée principalement de sable et de carbonate de soude.

La quantité de particules fines présentes dans le granulateur en fin du procédé de granulation est également très faible. En effet, le batch de matières pulvérulentes de départ présentait un pourcentage élevé de particules fines (diamètre moyen < 100 µm), de l'ordre de 50 % en poids. Après la granulation selon l'invention, ce pourcentage est d'environ 8 % en poids des granules finaux de l'exemple 2.

Les exemples 1 à 2 montrent bien que l'invention fournit un procédé efficace de granulation par voie humide qui permet de limiter voire de supprimer la nécessité de l'étape de séchage. Des granules avec des teneurs en eau idéale pour leur manutention aisée et leur stabilité mécanique ainsi qu'avec un taux résiduel de particules fines non granulées relativement bas ont été obtenus en utilisant uniquement un granulateur, sans séchoir. Des granules hétérogènes permettant un batching sélectif ont également pu être obtenus via une seule granulation.

Bien entendu, l'invention n'est pas limitée à ces exemples de réalisation ci-dessus, on peut y apporter des variantes de réalisation sans sortir du cadre de l'invention tel que défini par les revendications.

## Revendications

1. Procédé de fabrication de granules au départ de matières pulvérulentes **caractérisé en ce qu'**il comprend les étapes successives suivantes :
- les matières pulvérulentes à granuler sont divisées en au moins deux portions, une première portion et une deuxième portion ;
- un liquide liant est ajouté à ladite première portion de matières pulvérulentes ;
- le premier mélange ainsi obtenu est aggloméré dans un granulateur de sorte à obtenir des granules (a);
- la deuxième portion de matières pulvérulentes est ajoutée dans ledit granulateur ;
- le nouveau mélange obtenu est aggloméré dans le granulateur de sorte à obtenir des granules (b) ;
et **en ce que** ladite première portion de matières pulvérulentes représente au plus 75 % en poids des matières pulvérulentes à granuler.

2. Procédé selon la revendication précédente, **caractérisé en ce que** les matières pulvérulentes sont constituées de matières premières destinées à la fabrication de verre dans un four de fusion.

3. Procédé selon l'une des revendications précédentes, **caractérisé en ce que** ladite première portion de matières pulvérulentes représente au moins 25 % en poids des matières pulvérulentes à granuler.

4. Procédé selon l'une des revendications précédentes, **caractérisé en ce que** le liquide liant comprend de l'eau.

5. Procédé selon la revendication précédente, **caractérisé en ce que** le liquide liant comprend un ou plusieurs additifs.

6. Procédé selon l'une des revendications précédentes, **caractérisé en ce que** la quantité de liquide liant ajoutée est comprise entre 8 et 20 % en poids du premier mélange.

7. Procédé selon la revendication précédente, **caractérisé en ce que** la quantité de liquide liant ajoutée est comprise entre 8 et 16 % en poids du premier mélange.

8. Procédé selon l'une des revendications précédentes, **caractérisé en ce que** les granules (b) possèdent une teneur en eau comprise entre 2 et 6 % en poids.

9. Procédé selon la revendication précédente, **caractérisé en ce que** les granules (b) possèdent une teneur en eau comprise entre 3 et 5 % en poids.

10. Procédé selon l'une des revendications précédentes, **caractérisé en ce que** ladite première portion de matières pulvérulentes a une composition identique à celle de ladite deuxième portion de matières pulvérulentes.

11. Procédé selon l'une des revendications 1 à 9, **caractérisé en ce que** ladite première portion de matières pulvérulentes a une composition différente de celle de ladite deuxième portion de matières pulvérulentes.

## Patentansprüche

1. Verfahren zur Herstellung von Granulat aus Pulvermaterialien, **dadurch gekennzeichnet, dass** dieses die folgenden aufeinanderfolgenden Schritte umfasst:
- die zu granulierenden Pulvermaterialien werden in mindestens zwei Portionen, eine erste Portion und eine zweite Portion, geteilt;
- eine Bindeflüssigkeit wird zu der ersten Portion von Pulvermaterialien zugesetzt;
- die so erhaltene erste Mischung wird in einem Granulator derart agglomeriert, dass Granulat (a) erhalten wird;
- die zweite Portion von Pulvermaterialien wird in den Granulator zugesetzt;
- die neue erhaltene Mischung wird in dem Granulator derart agglomeriert, dass Granulat (b) erhalten wird;
und dadurch, dass die erste Portion von Pulvermaterialien höchstens 75 Gew.-% der zu granulierenden Pulvermaterialien repräsentiert.

2. Verfahren nach dem vorhergehenden Anspruch, **dadurch gekennzeichnet, dass** die Pulvermaterialien aus Ausgangsmaterialien bestehen, die zur Herstellung von Glas in einem Schmelzofen bestimmt sind.

3. Verfahren nach einem der vorhergehenden Ansprüche, **dadurch gekennzeichnet, dass** die erste Portion von Pulvermaterialien mindestens 25 Gew.-% der zu granulierenden Pulvermaterialien repräsentiert.

4. Verfahren nach einem der vorhergehenden Ansprüche, **dadurch gekennzeichnet, dass** die Bindeflüssigkeit Wasser umfasst.

5. Verfahren nach dem vorhergehenden Anspruch, **dadurch gekennzeichnet, dass** die Bindeflüssigkeit ein oder mehrere Additive umfasst.

6. Verfahren nach einem der vorhergehenden Ansprüche, **dadurch gekennzeichnet, dass** die Menge an zugesetzter Bindeflüssigkeit zwischen 8 und 20 Gew.-% der ersten Mischung beträgt.

7. Verfahren nach dem vorhergehenden Anspruch, **dadurch gekennzeichnet, dass** die Menge an zugesetzter Bindeflüssigkeit zwischen 8 und 16 Gew.-% der ersten Mischung beträgt.

8. Verfahren nach einem der vorhergehenden Ansprüche, **dadurch gekennzeichnet, dass** das Granulat (b) einen Wassergehalt zwischen 2 und 6 Gew.-% besitzt.

9. Verfahren nach dem vorhergehenden Anspruch, **dadurch gekennzeichnet, dass** das Granulat (b) einen Wassergehalt zwischen 3 und 5 Gew.-% besitzt.

10. Verfahren nach einem der vorhergehenden Ansprüche, **dadurch gekennzeichnet, dass** die erste Portion von Pulvermaterialien eine Zusammensetzung identisch mit jener der zweiten Portion von Pulvermaterialien aufweist.

11. Verfahren nach einem der Ansprüche 1 bis 9, **dadurch gekennzeichnet, dass** die erste Portion von Pulvermaterialien eine Zusammensetzung verschieden von jener der zweiten Portion von Pulvermaterialien aufweist.

## Claims

1. Process for the manufacture of granules starting from pulverulent materials, **characterized in that** it comprises the following successive stages:
- the pulverulent materials to be granulated are divided into at least two portions, a first portion and a second portion;
- a binding liquid is added to the said first portion of pulverulent materials;
- the first mixture thus obtained is agglomerated in a granulator so as to obtain granules (a);
- the second portion of pulverulent materials is added to the said granulator;
- the new mixture obtained is agglomerated in the granulator so as to obtain granules (b);
and **in that** the said first portion of pulverulent materials represents at most 75% by weight of the pulverulent materials to be granulated.

2. Process according to the preceding claim, **characterized in that** the pulverulent materials consist of starting materials intended for the manufacture of glass in a molten furnace.

3. Process according to either of the preceding claims, **characterized in that** the said first portion of pulverulent materials represents at least 25% by weight of the pulverulent materials to be granulated.

4. Process according to one of the preceding claims, **characterized in that** the binding liquid comprises water.

5. Process according to the preceding claim, **characterized in that** the binding liquid comprises one or more additives.

6. Process according to one of the preceding claims, **characterized in that** the amount of binding liquid added is between 8 and 20% by weight of the first mixture.

7. Process according to the preceding claim, **characterized in that** the amount of binding liquid added is between 8 and 16% by weight of the first mixture.

8. Process according to one of the preceding claims, **characterized in that** the granules (b) have a water content of between 2% and 6% by weight.

9. Process according to the preceding claim, **characterized in that** the granules (b) have a water content of between 3% and 5% by weight.

10. Process according to one of the preceding claims, **characterized in that** the said first portion of pulverulent materials has a composition identical to that of the said second portion of pulverulent materials.

11. Process according to one Claims 1 to 9, **characterized in that** the said first portion of pulverulent materials has a different composition from that of the said second portion of pulverulent materials.
